# EUROPÄISCHE PATENTSCHRIFT

(11) **EP 1 543 715 B1**
(45) Veröffentlichungstag und Bekanntmachung des Hinweises auf die Patenterteilung: **12.03.2008**
(21) Anmeldenummer: 04106323.1
(22) Anmeldetag: 06.12.2004
(51) Int. Cl.: A01D 43/08

(54) **Maschine zum Mähen von stängelartigem Erntegut**
Machine for mowing stalk crops
Machine pour faucher des plantes à tiges

(30) Priorität: 20.12.2003 DE 10360299
(43) Veröffentlichungstag der Anmeldung: 22.06.2005
(73) Patentinhaber: Maschinenfabrik Kemper GmbH & Co. KG, 48973 Stadtlohn (DE)
(72) Erfinder: Brüning, Ulrich, 48653, Coesfeld (DE)
(74) Vertreter: Holst, Sönke

(56) Entgegenhaltungen:
- FR-A- 2 647 299
- US-A- 5 852 922
- US-A1- 2002 116 911
- US-B1- 6 341 481

## Beschreibung

Die Erfindung betrifft eine Maschine zum Mähen von stängelartigem Erntegut, mit einer Mäh- und Einzugseinrichtung zum Abschneiden und Fördern von Pflanzen, welcher Fördermittel zur Aufnahme und zum Fördern sich eventuell von den Pflanzen lösender Pflanzenteile, insbesondere Fruchtstände, und Rückführmittel zum Rückführen der Pflanzenteile in den in der Maschine geförderten Pflanzenstrom zugeordnet sind.

Maschinen eingangs genannter Art werden in der Landwirtschaft verwendet, um stängelartiges Erntegut, beispielsweise Maispflanzen, vom Boden eines Felds abzuschneiden und einem die Maschine tragenden Feldhäcksler zuzuführen, in der die Pflanzen gehäckselt und auf einen Ladebehälter auf einem Anhänger ausgetragen werden. Derartige Maschinen weisen in der Regel eine Anzahl seitlich nebeneinander angeordneter, reihenunabhängig arbeitender Mäh- und Einzugseinrichtungen in Form von um die Hochachse rotierenden Trommeln mit um ihren Rand verteilten Ausbuchtungen, in denen die Pflanzenstängel Aufnahme finden, und unterhalb der Trommeln angebrachter Mähscheiben auf, die zum Abschneiden der Pflanzenstängel vom Erdboden dienen.

Falls die Pflanzen sehr ausgereift sind, können sich die Fruchtstände schon durch leichte Erschütterungen vom Stängel lösen. Derartige Erschütterungen treten insbesondere dann auf, wenn die Pflanze von der Maschine aufgenommen oder auf ihrem weiteren Weg durch die Maschine umgelenkt wird. Es wird angestrebt, dass möglichst wenig Fruchtstände auf den Erdboden fallen und dadurch dem Ernteprozess verloren gehen.

Die EP 1 234 493 A schlägt zur Vermeidung derartiger Verluste vor, auf der Oberseite der Mäh- und Einzugseinrichtungen Mitnehmer anzubringen, die Fruchtstände erfassen, die sich beim Erntevorgang oder beim Transport durch die Maschine von den Pflanzenstängeln lösen und auf die Oberseite der Mäh- und Einzugseinrichtungen fallen. Die Pflanzenstängel werden durch Abdeckungen von den Oberseiten der Mäh- und Einzugseinrichtungen heruntergeschoben und gelangen wieder in den Erntegutstrom.

Diese Erfindung eignet sich im Wesentlichen für Maschinen mit oberseitig flachen Mäh- und Einzugseinrichtungen. Außerdem ist eine Abdeckung der Mäh- und Einzugseinrichtungen erforderlich, die sich nachteilig auf die Förderwirkung der Mäh- und Einzugseinrichtung auswirken kann, da die abgedeckten Bereiche der Mäh- und Einzugseinrichtung nicht fördernd mit dem Erntegut zusammenwirken.

Die der Erfindung zu Grunde liegende Aufgabe wird darin gesehen, eine kompakte Maschine zum Mähen von stängelartigem Erntegut zu schaffen, bei der die Kolbenverluste gering gehalten sind und die oben erwähnten Nachteile nicht oder nur in geringerem Maße vorliegen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, der Mäh- und Einzugseinrichtung als Fördermittel zur Aufnahme und zum Fördern sich eventuell von Pflanzen lösender Fruchtstände oder anderer Pflanzenteile eine Rinne zuzuordnen, die sich an einem Rand der Mäh- und Einzugseinrichtung befindet. Eventuell von einer Pflanze herabfallende Teile, wie Fruchtstände, werden zwangsweise in die Rinne verbracht, beispielsweise durch die Fliehkraft oder bei geeignet geformter Oberseite der Mäh- und Einzugseinrichtung durch die Schwerkraft. In einen stromab liegenden Bereich der Rinne greift ein Bereich der Rückführmittel ein. Dadurch werden die Pflanzenteile aus der Rinne entnommen und in den in der Maschine geförderten Pflanzenstrom überführt, so dass sie dem Ernteprozess nicht verloren gehen.

Da es ausreicht, wenn die Rückführmittel nur mit der Rinne zusammenwirken, die sich am Rand der Mäh- und Einzugseinrichtung befindet, ist kein Abstreifelement mehr erforderlich, dass sich bis zur Drehachse der Mäh- und Einzugseinrichtung erstreckt. Die Rückführmittel können somit klein und leicht ausgeführt werden, ermöglichen auch andere als flache Oberseiten der Mäh- und Einzugseinrichtungen und beeinträchtigen nicht die Förderwirkung der Trommel, da es nicht notwendig ist, dass sie sie überdecken.

Die Rinne kann durch Elemente gebildet werden, die sich mit der Mäh- und Einzugseinrichtung im Erntebetrieb bewegen, indem sie beispielsweise mit ihr fest verbunden sind. Die sich mitbewegenden Elemente der Rinne bilden zumindest ihre Innenseite, während sich die Außenseite der Rinne in der Regel ebenfalls mit der Mäh- und Einzugseinrichtung mitbewegt. Denkbar wäre aber auch, die Außenseite der Rinne mit dem Rahmen der Maschine zu verbinden.

Die Rückführmittel sind vorzugsweise an der Rückseite der Mäh- und Einzugseinrichtung angeordnet, an der sich auch ein Querförderkanal befindet, in welchen die Fruchtstände und anderen Pflanzenteile aus der Rinne verbracht werden. Befindet sich ein Förderkanal mit beliebiger Förderrichtung an einer anderen Stelle der Maschine, beispielsweise an der Vorderseite, können die Rückführmittel die Pflanzen an einer entsprechenden, geeigneten Stelle in den Förderkanal abgeben.

Die Oberseite der Mäh- und Einzugseinrichtung könnte flach gestaltet sein. Die Fruchtstände könnten dann durch die Fliehkraft und/oder geeignete an der Oberseite befestigte Mitnehmer, die beispielsweise in Drehrichtung nachlaufend gekrümmt sind, in die Rinne gefördert werden. Bei einer anderen Ausführungsform sind die Oberseiten der Mäh- und Einzugseinrichtungen nach oben zumindest im Randbereich gewölbt, beispielsweise kegelstumpfförmig, so dass darauf fallende Pflanzenteile durch die Schwerkraft in die Rinne gelangen, die sich an ihrem äußeren Rand befindet. Ein Vorteil besteht darin, dass man eine von der Geschwindigkeit der Mäh- und Einzugseinrichtung unabhängige Förderwirkung erzielt.

In den Zeichnungen sind zwei nachfolgend näher beschriebene Ausführungsbeispiele der Erfindung dargestellt. Es zeigt:
- Fig. 1: eine perspektivische Frontansicht einer Maschine zum Mähen von stängelartigem Erntegut und eines sie tragenden Feldhäckslers,
- Fig. 2: einen vertikalen Querschnitt durch eine erste Ausführungsform der Einzugs- und Mäheinrichtungen der Maschine aus Figur 1,
- Fig. 3: einen vertikalen Querschnitt durch eine zweite Ausführungsform der Einzugs- und Mäheinrichtungen der Maschine aus Figur 1, und
- Fig. 4: eine perspektivische Ansicht des stromab liegenden Teils der Rinne und der Rückführmittel der Maschine aus Figur 1, die Pflanzenteile aus der Rinne herausheben und in den Erntegutstrom zurückführen.

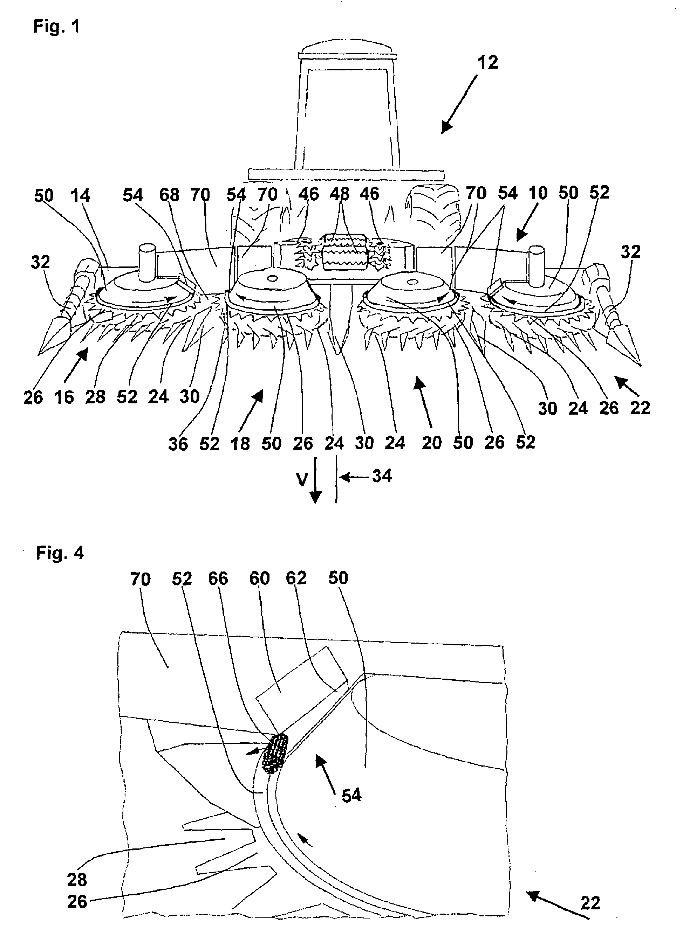

In der Figur 1 ist eine Maschine 10 zum Mähen von stängelartigem Erntegut, insbesondere Mais, in einer Frontperspektive dargestellt. Die Maschine 10 ist an einem selbstfahrenden Feldhäcksler 12 befestigt und wird von ihm in einer Fahrtrichtung V über ein abzuerntendes Feld bewegt.

Die Maschine 10 weist einen Rahmen 14 auf, an dem seitlich nebeneinander vier Mäh- und Einzugseinrichtungen 16, 18, 20, 22 befestigt sind. Die Mäh- und Einzugseinrichtungen 16 bis 22 setzen sich jeweils aus einer unteren, in Drehung versetzbaren Schneidscheibe 24 und koaxial darüber angeordneten, in Drehung versetzbaren Förderscheiben 26 zusammen. Die Schneidscheiben 24 sind am Rand mit scharfen Zähnen ausgestattet oder anderweitig geschärft, um die Pflanzenstängel von dem im Boden verbleibenden Stumpf abzutrennen. Die Stängel finden in Ausbuchtungen 28 der Förderscheiben 26 Aufnahme und werden wie unten beschrieben zum Feldhäcksler 12 transportiert.

Zwischen den Mäh- und Einzugseinrichtungen 16 bis 22 befinden sich jeweils Stängelteiler 30, um die Pflanzen seitlich abzulenken und in den Eingriffsbereich der Mäh- und Einzugseinrichtungen 16 bis 22 zu verbringen, wenn erforderlich. Der Stängelteiler 30 zwischen den mittleren Mäh- und Einzugseinrichtungen 18, 20 ist rautenförmig geformt und erstreckt sich nach hinten bis unmittelbar vor die Einzugswalzen 48 des Feldhäckslers 12. An den beiden äußeren Seiten der Maschine 10 befinden sich antreibbare Stängelheberschnecken 32. An den Vorderseiten der Mäh- und Einzugseinrichtungen 16 bis 22 sind kleinere Stängelteiler 36 angeordnet.

Die Arbeitsbreite der Mäh- und Einzugseinrichtungen 16 bis 22 entspricht jeweils zwei Reihen, d. h. etwa 1,5 m. Die Maschine 10 kann somit 8 Reihen Mais gleichzeitig ernten.

Beim Erntebetrieb drehen sich die Mäh- und Einzugseinrichtungen 16 bis 22 in den durch die Pfeile angedeuteten Richtungen. Die der Längsmittelebene 34 der Maschine 10 benachbarten, inneren Mäh- und Einzugseinrichtungen 18, 20 fördern die Pflanzen somit zunächst nach außen und nach hinten, während die äußeren Mäh- und Einzugseinrichtungen 16, 22 sich zu den ihnen jeweils benachbarten Mäh- und Einzugsrichtungen 18, 20 gegensinnig drehen. Die äußeren Mäh- und Einzugseinrichtungen 16, 22 übergeben ihr Erntegut etwa in der Mitte zwischen den Drehachsen der Mäh- und Einzugseinrichtungen 16, 18 bzw. 20, 22 an die inneren Mäh- und Einzugseinrichtungen 18, 20. An der Rückseite der inneren Mäh- und Einzugseinrichtungen 18, 20 wird das Erntegut an Schrägfördertrommeln 46 übergeben, die um leicht nach vorn geneigte Achsen rotieren und den Höhenunterschied zwischen dem Boden der Maschine 10 und den nachfolgenden Einzugswalzen 48 des Einzugskanals des Feldhäckslers 12 überwinden. An der Rückseite der inneren Mäh- und Einzugseinrichtungen 18, 20 wird das Erntegut somit in Querförderkanälen 68 gefördert, die nach hinten durch eine mit dem Rahmen 14 fest und starr verbundene Rückwand 70 der Maschine 10 begrenzt werden. Die äußeren Bereiche der Rückwand 70 erstrecken sich bis in die Nähe der Drehachsen der äußeren Mäh- und Einzugseinrichtungen 16, 22.

An den Oberseiten der Mäh- und Einzugseinrichtungen 16-22 sind jeweils Abdeckungen 50 mit der Form eines Kegelstumpfs angeordnet. Die Abdeckungen 50 verengen sich somit in ihrem Außenbereich konisch nach oben und haben einen flachen Innenbereich. Am unteren Rand des Fußes der Abdeckungen 50 unmittelbar oberhalb der jeweils obersten Förderscheibe 26 der Mäh- und Einzugseinrichtungen 16-22 sind U-förmige, sich nach oben hin öffnende Rinnen 52 angeordnet. An der Rückwand 70 der Maschine 10 sind Rückführmittel 54 befestigt, die in die Rinnen 52 eingreifende Abschnitte aufweisen.

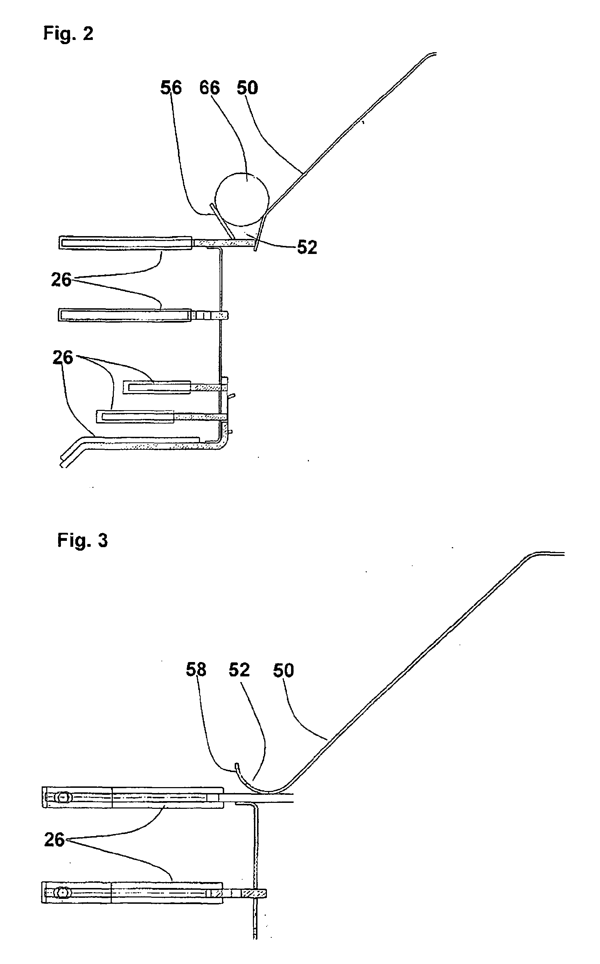

Die Figur 2 zeigt einen Schnitt durch eine erste Ausführungsform einer der Mäh- und Einzugseinrichtungen 16-22. Am Fuß der kegelstumpfförmigen Abdeckung 50 wird die Rinne 52 nach innen durch den unteren Bereich der Abdeckung 50 und nach außen durch einen schräg nach oben und außen geneigten, separaten Ring 56 gebildet, der mit der obersten Förderscheibe 26 verbunden ist.

Die Ausführungsform nach Figur 3 weist eine Rinne 52 auf, die nach innen ebenfalls durch den unteren Bereich der Abdeckung 50 und nach außen durch einen nach oben gezogenen Rand 58 der Abdeckung 50 gebildet wird.

Die Figur 4 ist eine perspektivische Ansicht der in Figur 1 rechts eingezeichneten, äußeren Mäh- und Einzugseinrichtung 22 und des benachbarten Teils des Rahmens 14. Die Rückführmittel 54 bestehen aus einem winkelförmigen Blech. Es umfasst einen ersten Abschnitt 60, der an dem sich oberhalb der Mäh- und Einzugseinrichtung 22 erstreckenden Bereich der Rückwand 70 des Rahmens 14 befestigt ist und einen von dem Abschnitt 60 nach vorn abgewinkelten, zweiten Abschnitt 62, der sich bis in die Rinne 52 erstreckt. Den anderen Mäh- und Einzugseinrichtungen 16-20 sind gleichartige Rückführmittel 54 zugeordnet, die jeweils an der Rückwand 70 befestigt sind. Den mittleren Mäh- und Einzugseinrichtungen 18, 20 könnten die Rückführmittel 54 auch im rückwärtigen Bereich des mittleren Halmteilers 30 vor dem Querförderkanal 68 zugeordnet sein, damit sie den Gutstrom im Querförderkanal 68 möglichst wenig beeinträchtigen.

Die Wirkungsweise der als Fördermittel zur Aufnahme und zum Fördern sich eventuell von Pflanzen lösender Pflanzenteile dienenden Rinne 52 und der Rückführmittel 54 ist folgendermaßen. Falls sich beim Abschneiden der Pflanzen vom Erdboden durch die Schneidscheibe 24, bei der Aufnahme der Pflanze in einer der Ausbuchtungen 28 der Förderscheiben 26 oder beim weiteren Transport durch die Maschine 10, insbesondere beim Umlenken, durch die entstehenden Erschütterungen oder Beschleunigungen Fruchtstände 66, beispielsweise Maiskolben, oder andere Pflanzenteile von den Stängeln der Pflanzen lösen, fallen sie auf die Abdeckung 50. Dort rutschen sie im konischen Außenbereich durch die Schwerkraft in die Rinne 52. Fallen die Fruchtstände oder Pflanzenteile auf den Innenbereich der Abdeckung 50, bewegen sie sich durch die Fliehkraft nach außen und rutschen dann am konischen Außenbereich nach unten. Außerdem werden sie bei den äußeren Mäh- und Einzugseinrichtungen 18, 22 durch den benachbarten Bereich der Rückwand 70 von der Abdeckung 50 heruntergestreift. Die Fruchtstände 66 gelangen somit in die Rinne 52, wie in der Figur 4 dargestellt.

Unmittelbar vor dem Querförderkanal 68 heben die Abschnitte 62 der Rückführmittel 54 die Fruchtstände 66 oder andere Pflanzenteile löffelartig wieder aus der Rinne 52 heraus. Sie fallen in den Querförderkanal 68 und werden mit dem Strom der anderen geernteten Pflanzen in den Feldhäcksler 12 gefördert. Da die Rinnen 52 und die Abstreifmittel 54 vorhanden sind, könnten die Bereiche der Rückwand 70, die sich oberhalb der äußeren Mäh- und Einzugseinrichtungen 16, 22 erstrecken, auch entfallen. Durch die Verwendung der Rinnen 52 und Abstreifmittel 54 erübrigt sich die Verwendung von Vordruckbügeln.

## Patentansprüche

1. Maschine (10) zum Mähen von stängelartigem Erntegut, mit einer Mäh- und Einzugseinrichtung (16-22) zum Abschneiden und Fördern von Pflanzen, welcher Fördermittel zur Aufnahme und zum Fördern sich eventuell von den Pflanzen lösender Pflanzenteile, insbesondere Fruchtstände (66), und Rückführmittel (54) zum Rückführen der Pflanzenteile in den in der Maschine (10) geförderten Pflanzenstrom zugeordnet sind, **dadurch gekennzeichnet, das**s die Fördermittel eine am Rand der Mäh- und Einzugseinrichtung (16-22) befestigte Rinne (52) umfassen, in die sich von geernteten Pflanzen ablösende Pflanzenteile gelangen, und dass die Rückführmittel (54) einen in sich die Rinne (52) erstreckenden Abschnitt (62) aufweisen.

2. Maschine (10) nach Anspruch 1, **dadurch gekennzeichnet, dass** die Rinne (52) zumindest teilweise durch sich mit der Mäh- und Einzugseinrichtung (16-22) verbundene Elemente gebildet wird.

3. Maschine (10) nach Anspruch 1 oder 2, **dadurch gekennzeichnet, dass** die Rückführmittel (54) an der Rückseite der Mäh- und Einzugseinrichtung (16-22) angeordnet sind.

4. Maschine (10) nach einem der Ansprüche 1 bis 3, **dadurch gekennzeichnet, dass** die Oberseite der Mäh- und Einzugseinrichtung (16-22) nach oben gewölbt ist, so dass auf sie fallende Fruchtstände (66) durch die Wirkung der Schwerkraft in die an ihrem äußeren Rand angeordnete Rinne (52) gelangen.

## Claims

1. Machine (10) for mowing stalk-like harvested crop, having a mowing and gathering device (16-22) for the cutting and conveyance of plants, to which there are assigned conveying means for the reception and conveyance of plant parts which might detach themselves from the plants, in particular seed heads (66), and return means (54) for returning the plant parts into the plant stream conveyed in the machine (10), **characterized in that** the conveying means comprise a chute (52) which is fastened to the rim of the mowing and gathering device (16-22) and into which plant parts detaching themselves from the harvested plants make their way, and **in that** the return means (54) have a portion (62) which extends into the chute (52).

2. Machine (10) according to Claim 1, **characterized in that** the chute (52) is formed at least partially by elements connected to the mowing and gathering device (16-22).

3. Machine (10) according to Claim 1 or 2, **characterized in that** the return means (54) are disposed on the rear side of the mowing and gathering device (16-22).

4. Machine (10) according to one of Claims 1 to 3, **characterized in that** the top side of the mowing and gathering device (16-22) is arched upwards, so that seed heads (66) falling onto it make their way by gravitational action into the chute (52) disposed on its outer rim.

## Revendications

1. Machine (10) destinée à couper des végétaux sur tige, comportant un dispositif de coupe et de ramassage (16-22), qui est destiné à couper et à transporter les végétaux et auquel sont associés des moyens de transport pour ramasser et pour transporter des parties de végétaux se détachant éventuellement des végétaux, en particulier des épis (66), et des moyens de renvoi (54) pour ramener les parties de végétaux dans le flux végétal transporté dans la machine (10), **caractérisée en ce que** les moyens de transport comportent une goulotte (52) fixée sur le bord du dispositif de coupe et de ramassage (16-22), dans laquelle parviennent des parties de végétaux se détachant des végétaux récoltés, et **en ce que** les moyens de renvoi (54) comportent une partie (62) s'étendant dans la goulotte (52).

2. Machine (10) selon la revendication 1, **caractérisée en ce que** la goulotte (52) est formée au moins en partie par des éléments assemblés au dispositif de coupe et de ramassage (16-22).

3. Machine (10) selon la revendication 1 ou 2, **caractérisée en ce que** les moyens de renvoi (54) sont agencés sur le côté arrière du dispositif de coupe et de ramassage (16-22).

4. Machine (10) selon l'une quelconque des revendications 1 à 3, **caractérisée en ce que** le côté supérieur du dispositif de coupe et de ramassage (16-22) est bombé vers le haut, de telle sorte que des épis (66) tombant sur celui-ci parviennent, sous l'effet de la force de gravité, dans la goulotte (52), agencée sur le bord extérieur de celui-ci.
